# EUROPEAN PATENT APPLICATION

(11) **EP 1 515 250 A2**
(43) Date of publication of application: **16.03.2005**
(21) Application number: 04255450.1
(22) Date of filing: 08.09.2004
(51) Int. Cl.: G06F 17/30

(54) **Method and apparatus for information search**

(30) Priority: 12.09.2003 JP 2003321654
(71) Applicant: Hewlett-Packard Development Company, L.P., Houston, TX 77070 (US)
(72) Inventor: Shimizu, Hiroyuki, Musashino-shi Tokyo 180-0001 (JP); Nakagawa, Shinya, Mitaka-shi Tokyo 181-0012 (JP); Yamamoto, Akio, Yokohama Kanagawa 227-0061 (JP)
(74) Representative: Exell, Jonathan Mark

(57) **Abstract**

A search method responds to (1) a data base that stores elements (e.g., stores, programs, etc.) that are information search targets, and (2) affiliations among the elements, such as stores that sponsor programs, stores that participate in the programs, etc. Users designate the attributes (stores, programs, etc.) of elements to be searched for, and the affiliations thereof to perform searches, so that the users can easily search for desired information present on small display screens.

## Description

### 1. Field of the Invention

The present invention relates to method of and apparatus for searching an assembly of information for target information.

### 2. Description of Related Art

Prior art search engines, such as those used by Google and Yahoo, search for information (Web pages) available on the Internet by searching for URLs of target Web pages in responding to keywords.

Because the number of Web pages was relatively small when the Internet was young, target Web pages could be easily searched by a keyword search. However, as the number of Web pages has increased to its present size, searching for target Web pages by using keywords has become more different.

Furthermore, as the great number of Web pages are found as a result of a keyword search, it is difficult to use keyword search for a portable terminal, e.g. a personal digital assistance (PDA) or cellphone, having a small screen for displaying the search result, etc.

Accordingly, an object of the invention is to provide a new and improved information search method and apparatus that can more easily search for target information and obtain information that is narrowed down to some extent from the first time the information is obtained.

### 3. Summary of the Invention

An information search apparatus according to one aspect of the present invention is an apparatus for searching one or more stored information elements that are related with one another. The apparatus is arranged for (1) selecting one or more first information elements as targets to be searched for and one or more second information elements used for the search; and (2) searching third information elements related to the selected second information elements from the selected first information elements.

Preferably, the information elements contain one or more elements indicating a substantive thing, one or more relations defined between the elements, one or more roles played by the elements in the relations, one or more attributes of the elements, and one or more attributes of the relations, or one or more combinations thereof.

Preferably, the elements are further related with one another by affiliations between the elements.

Preferably, the selection includes selecting one or more of the elements having the same relation and role as the first information element, and selects one or more of the elements, the relations, roles, the attributes of the elements and the attribute of the relation as the second information element.

Preferably, the first information element, the second information element and the third information element are selected on the basis of a search request or a subordinate search request achieved as an analysis result of the search request.

Preferably, there is a selection of one or more of the first information elements and one or more of the second information elements or any one of the first information elements and the second information elements in accordance with the selection of the third information element obtained as the result of the searching.

Preferably, the information search apparatus is arranged for accepting selection of one or more of the first information elements and one or more of the second information elements, or the third information elements used as the first information elements or the second information elements. The first information elements and the second information elements are selected from the selected third information elements, or the first information elements and the second information elements are selected from the stored information elements and the selected third information elements.

Preferably, the selection of the first information and the second information, and the search of the third information are repeated until the third information satisfies a predetermined condition.

Furthermore, a search method according to the present invention includes searching one or more stored information elements, wherein the information elements are related with one another. The method includes selecting one or more first information elements as targets to be searched for and one or more second information elements used for the search. The method includes searching third information elements related with the selected second information elements from the selected first information elements.

Furthermore, the present invention relates to a memory or storage medium that stores programs causing a computer to search for one or more stored information elements related with one another. The program causes the computer to execute a step of selecting one or more first information elements as targets to be searched for and one or more second information elements used for the search; and a step of searching third information elements related with the selected second information elements from the selected first information elements.

The present invention enables target information to be easily searched for.

Furthermore, the present invention enables searching of information which is useful to users and is narrowed down to some extent from the first time it was used.

The present invention is able to search for target information.

### 4. Brief Description of the Drawings

Examples of the present invention will now be described in detail, with reference to the accompanying drawings in which:
Fig. 1 is a first tree style diagram including elements (program 1, store 1, etc.), relations (relation 1, etc.) among elements/roles (shop, etc.) and the attributes thereof (participant relation, location relation, etc.);
Fig. 2 is a table of the relation between the elements shown in Fig. 1 and the roles thereof;
Fig. 3 is a table of the relations shown in Figs. 1 and 2 and the attributes thereof;
Fig. 4 is a table of the elements of Figs. 1 and 2 and the natures thereof (e.g. areas, programs, and stores);
Fig. 5 is a diagram of an information search system including a preferred embodiment of the present invention;
Fig. 6 is a diagram of the hardware construction of a portion of the Fig. 5 system including a user terminal, a search server, relational data base (RDB), a terminal for registration and a machine to be searched;
Fig. 7 is a flow diagram of operation of a program operating on the user terminal of Figs. 5 and 6;
Fig. 8 is a diagram of a user interface (UI) image displayed on a display/input device of the user terminal as a result of the terminal program of Fig. 7;
Fig. 9 is a diagram of the construction of a search program operating on the search server shown in Figs. 5 and 6;
Fig. 10 is a flowchart of processing (referred to as S10 processing herein) performed by the computer in response to the search program shown in Fig. 9;
Fig. 11 is a flowchart of registration processing (referred to as S12 processing herein) of information elements performed by RDB and the registration terminal of Figs. 5 and 6;
Fig. 12 is a communication sequence diagram of the basic search processing operations performed by the information search system of Fig. 5;
Fig. 13 is a first diagram including an example of types of queries transmitted from the search engine of Fig. 7 to a data base manager;
Fig. 14 is a second diagram including an exemplary listing of types of queries transmitted from the search engine of Fig. 7 to a data base manager;
Fig. 15 is third diagram including an exemplary listing of types of queries transmitted from the search engine of Fig. 7 to the data base manager;
Fig. 16 is a fourth diagram including an exemplary listing of types of queries transmitted from the search engine of Fig. 7 to the data base manager;
Fig. 17 is a fifth diagram including an exemplary listing of types of queries transmitted from the search engine of Fig. 7 to the data base manager;
Fig. 18 is a second tree style diagram including elements (program 1, store 1, etc.) and the attributes thereof (program, store, etc.), the relations (relation 1, etc.)/roles (shop, etc.) between the elements and the attributes thereof (participant relation, location relation, etc.);
Fig. 19 is a communication sequence diagram of a second search for processing information in the information search system of Fig. 5;
Fig. 20 is a first diagram including SQL sentences that the data base manager of Fig. 9 supplies to RDB and includes the contents of structured query language (SQL) sentences 16, SQL 13, SQL 26 of Fig. 19;
Fig. 21 is a second diagram including SQL sentences that the data base manager of Fig. 9 supplies to RDB, and includes the contents of SQL 52 of Fig. 19;
Fig. 22 is a third diagram including SQL sentences that the data base manager of Fig. 9 supplies to RDB, and includes the content of SQL 33 of Fig. 19; and,
Fig. 23 is a fourth diagram including SQL sentences that the data base manager of Fig. 9 supplies to RDB, and includes the content of SQL 41 of Fig. 19;

### 5. Detailed Description

First, before describing an embodiment of the present invention, examples of how the embodiment processes search queries will be first briefly described in order to make the operation of the embodiment more easily understood.

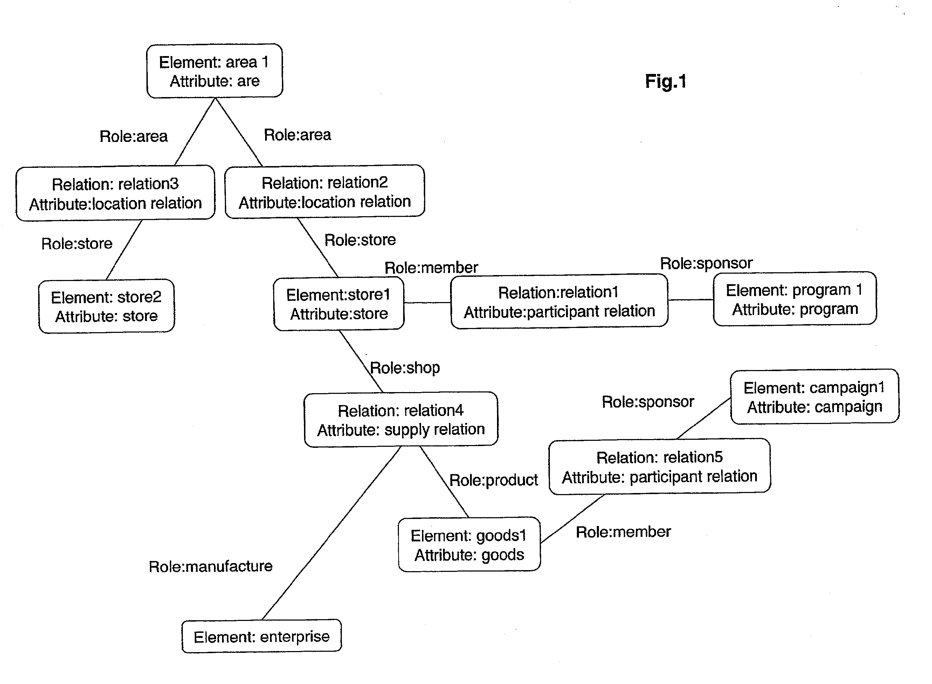

In the following portion, Figs 1 to 4 include a concrete example of instantiating the present invention to have it understood plainly.

Figs. 1 to 4 include an example of target elements to be searched, and the relations/roles among them and the attributes thereof.

Particularly, Fig. 1 is a network diagram including the elements (e.g., program 1, store 1, goods, enterprise, campaign, etc.), the relations (relation 1, etc.)/roles (store, member, shop, sponsor etc.) among the elements and the attributes (participant relation, location relation, etc.).

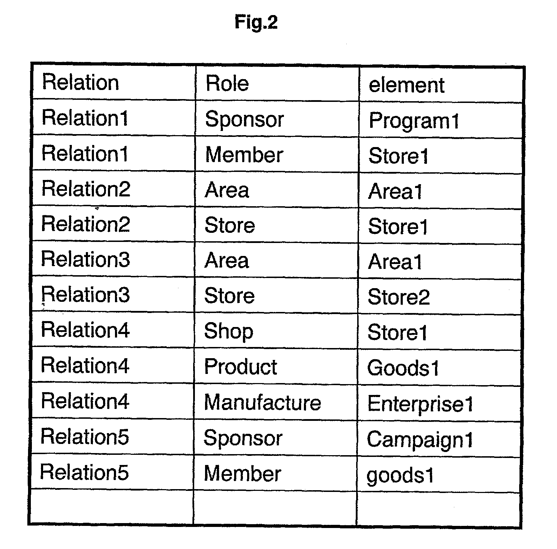

Fig. 2 is a table of an example of the relations among the elements shown in Fig. 1, wherein the elements constitute the relations and the roles of the elements.

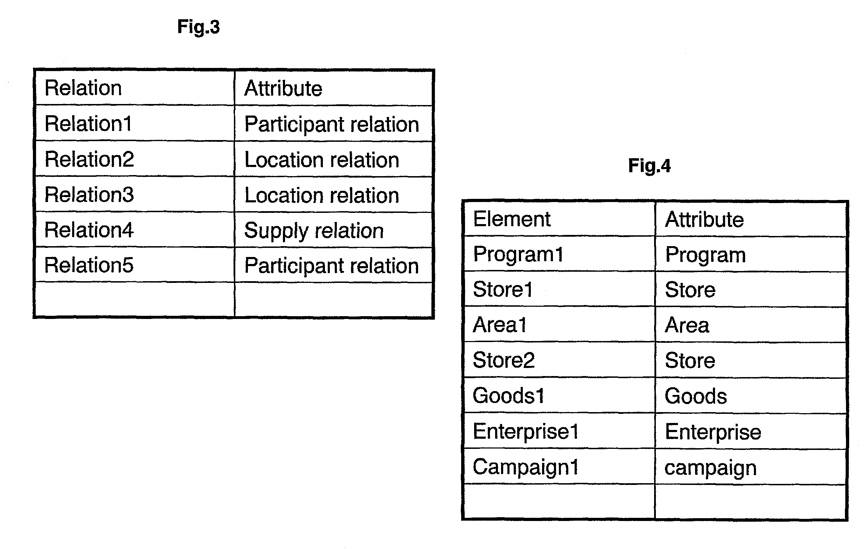

Fig. 3 is a table of an example of the relations shown in Fig. 1 and the attributes thereof.

Fig. 4 is a table of an example of the elements shown in Fig. 1 and the attributes thereof.

As shown in the rectangles surrounded by solid lines in Fig. 1 and in Fig. 2, the elements to be searched include stores (stores 1, 2) such as retail shops, department stores, etc., programs (program 1) such as point programs, events, etc., areas (area 1) where stores exist, groups of one or more goods (goods 1) with which stores deal, enterprises (enterprise 1) for producing/selling groups of goods, campaigns (campaign 1) to promote sales executed by enterprises, stores, programs, etc.

Furthermore, as shown in rectangles surrounded by dashed lines in Fig. 1 and by the table of Fig. 2, the relations 1 to 5 include search targets that are defined as the relations among the elements. The rectangles with dashed lines and Fig. 2 also indicate the role each element plays in each relation.

As shown in Figs. 1 and 2, in this example, relation 1 indicates that a program 1 takes a role as a sponsor for a program in which store 1 participates, and that store 1 takes the role of a member participating in program 1.

Furthermore, Figs. 1 and 2 indicate that, in relation 2, area 1 indicates an area where store 1 is located and that store 1 takes the role of a shop in area 1.

Still furthermore, Figs. 1 and 2 indicate that in relation 3 area 1 takes the role of indicating an area where store 2 is located, and that store 2 takes the role of a shop in area 1.

In relation 4, goods 1 take the role of a product supplied by an enterprise 1, store 1 takes the role of a shop and enterprise 1 takes the role of a manufacturer of goods 1.

In a relation 5, campaign 1 takes the role of a sponsor of a campaign in which the goods of group 1 participate, and the goods of group 1 takes the role of a member participating in campaign 1.

The roles defined for the respective relations as described above are also targets to be searched for. In this example, as shown in Fig. 3, attributes such as participant relations, location relations, supply relations, etc. are defined for the relations 1 to 5 shown in Figs. 1, 2.

Furthermore, in this example, attributes (e.g., programs, stores, areas, goods groups, enterprises, campaigns) are defined for the respective elements as shown in Fig. 4.

As described above, the elements are related with one another by defining the relations and the roles among the elements as shown in Figs. 1 to 4.

Furthermore, the definitions of the attributes for the elements and the relations make it possible to construct a data base in which pre-related information (element/relation/role) can be searched by indicating elements, relations and the attributes thereof and by tracing the related elements and relations.

As described above, the information (elements/relations/roles) in the pre-related range and the attributes thereof are stored as a data base to be used for searching with the information and the attributes thereof as a keyword, whereby the search result of the useful information and the attributes thereof having a proper amount of information are supplied to each user.

The constituent elements of data used in the search contain the elements, the relations, the roles, the attributes of the elements and the attributes of the relations. A main feature of the search process is that a related "affiliation" can be easily grasped among respective elements which are not directly included as constituent elements of the data base.

The related affiliation among the respective elements means commonality exists consciously or unconsciously among the respective elements.

"Consciously existing commonality" is defined as the commonality among elements which occurs as a result of stores, enterprises, service suppliers, etc. which input the data that construct the data bases while paying their attention to commonality with other stores, enterprises, service suppliers, etc.

"Unconsciously existing commonality" is defined as the commonality among elements which exists in the sight of users using data bases constructed by stores, enterprises, service suppliers, etc. which input the data without paying attention to commonality with other stores, enterprises, service suppliers, etc..

Described information are the cases in which (1) elements are of the same type (that is, store vs. store or the like) and (2) elements are of different types (that is, store vs. campaign or the like). Each of cases (1) and (2) is described with reference to an exemplary "consciously existing commonality" case and an "unconsciously existing commonality" case.
(1) An example of the same type of elements and an unconsciously existing commonality is:
   Store 1 and store 2 participate in program 1 by coincidence; store 1 and store 2 separately register program 1 as a program in which they participate without being conscious of the separate registrations.
   In this case, it appears to a user who searches a data base, that store 1 and store 2 commonly participate in program 1, and that an affiliation exists between store 1 and store 2.
   By using such an affiliation, the user can easily determine the store 2 where the user can use program 1 which can be used in store 1.
(2) An example of the same type of elements and consciously existing commonalities:
   Store 1 (for example, a café) and store 2 (for example, a movie theater) jointly wage campaign 1 (for example, selling a set of tickets for a drink and a movie); an affiliation based on campaign 1 is established between store 1 and store 2. In campaign 1, both store 1 and store 2 register into a data base campaign 1 as a participant campaign.
   A user can find store 1 and store 2 by utilizing such an affiliation, and utilize a discount from both the stores.
(3) An example of different types of elements and an unconsciously existing commonality is:
   Store 1 is supplied with goods 1 by enterprise 1 that makes goods 1 that participate in campaign 1; store 1 registers into a data base that (a) enterprise 1 is a manufacturer of goods 1 and (b) campaign 1 is a participant campaign of goods 1.
   In this case, since enterprise 1 and campaign 1 are related with goods 1 by store 1, a user is likely to realize there is an affiliation between enterprise 1 and campaign 1.
   By using such an affiliation, the user can easily find the campaign in which goods 1 of enterprise 1 participate, and purchase the goods of enterprise 1 by cleverly utilizing the campaign.
(4) An example of different types of elements and a consciously existing commonality is:
   Store 1 participates in program 1; there is a conscious affiliation between store 1 and program 1. The participant relation between store 1 and program 1 is registered in a data base. Furthermore, when store 1 causes goods 1 to participate in campaign 1, there is a conscious affiliation having goods 1 as a common element between store 1 and campaign 1.
   Therefore, store 1 registers into the data base goods 1 as sales goods and campaign 1 registers into the data base goods 1 as participant goods. By using such an affiliation, a user can easily determine that program 1 can be used as store 1 or that store 1 participates in campaign 1.
   The above-cited examples show that by using the data base described above, a user can search for store 2 that is located in the same area as the store 1 that is participating in campaign 1, or search for enterprise 1 that supplies goods 1 to store 1 and the type of goods 1 that enterprise 1 supplies to store 1.
   From such a viewpoint, the search engine described below overcomes a disadvantage of existing keyword searches that supply a user with a large amount of useless information. The search engine is also suitably applied to Internet search using a device having a limited surface area, such as a mobile compact PC/PDA (Personal Digital Assistant) or the like.

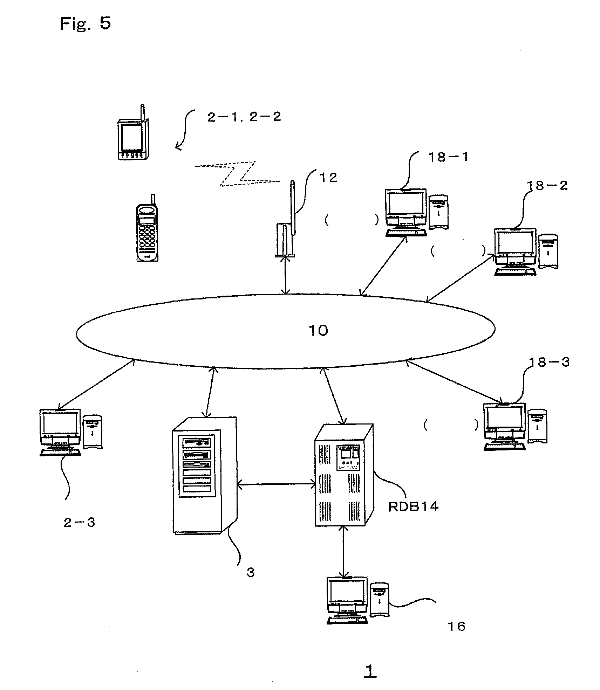

   Fig. 5 is a block diagram of an information search system 1 that enables the principles of the foregoing examples to be performed.
   As shown in Fig. 5, the information search system 1 comprises mobile user terminals 2-1, 2-1, a static user terminal 2-3, a search server 3, a wireless base station 12, a relational data base (RDB) 14, a terminal for registration 16, machines 18-1 to 18-3, etc. (computers) to be searched for and which are connected to one another through a network 10 such as the Internet or the like.
   The numbers of the respective constituent elements in the information search system 1 are examples.
   When any one of plural constituent parts, such as user terminals 2-1 to 2-3, is indicated without being identified, it may be abbreviated merely as user terminal 2 or the like.
   In information search system 1, mobile user terminals 2-1, 2-2 are mobile personal computers (PCs), cellular phones, PDAs or the like, that are connected to network 10 through the wireless base station 12 or the like.
   The other constituent elements of the information search system 1, such as the machines 18 to be searched for, are typically connected to the network 10 through a wire line or the like.
   The registration terminal 16 is directly connected to RDB 14 or connected through the network 10 to RDB 14.
   The machines 18-1 to 18-3 to be searched for are located in stores 1 to 3, corresponding to information-search targets respectively, and operate as World Wide Web (WWW) servers for distributing Web pages to the user terminals 2 or the like.
   The information search system 1 relates elements, such as stores, programs, campaigns, etc., with one another on the basis of the relations defined among these elements and then stored by the above constituent parts. In response to an inquiry from a user, the information search system 1 searches an assembly of the elements for a proper element (first element) to return it to the user.

### Hardware

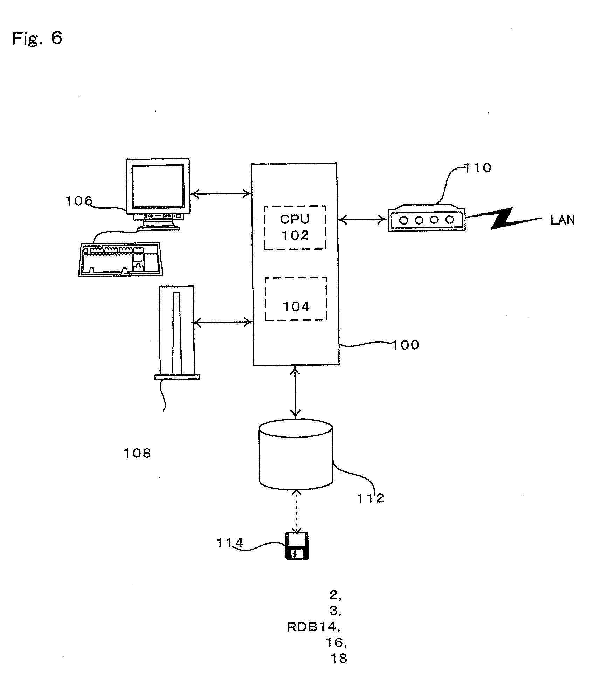

Fig. 6 is a diagram of exemplary hardware at each of user terminal 2, search server 3, RDB 14, registration terminal 16 and the machines 18 to be searched for, as shown in Fig. 5.

As shown in Fig. 6, each of the user terminal 2, the search server 3, RDB 14, the registration terminal 16 and the machines 18 to be searched for comprises a main body 100 including CPU 102, memory 104 and peripheral circuits thereof, a display/input device 106 including a display device, a keyboard, a mouse, etc., peripherals 108 for performing the functions inherent to the respective devices, such as a file system in RDB 14, etc., a communication device 110 for performing the communication function with network 10 or the other constituent parts of the information search system 1, and a digital data recording device 112, such as a hard disk drive (HDD), a compact disc (CD) device or the like.

That is, each of the user terminal 2, the search server 3, RDB 14, the registration terminal 16 and the machines 18 to be searched for has a constituent part that is a computer for communicating with the network 10 or the other constituent parts of the information search system 1.

### Software

The software-based processing of each constituent part of the information search system 1 (Fig. 5) is now described.

### User Terminal 2

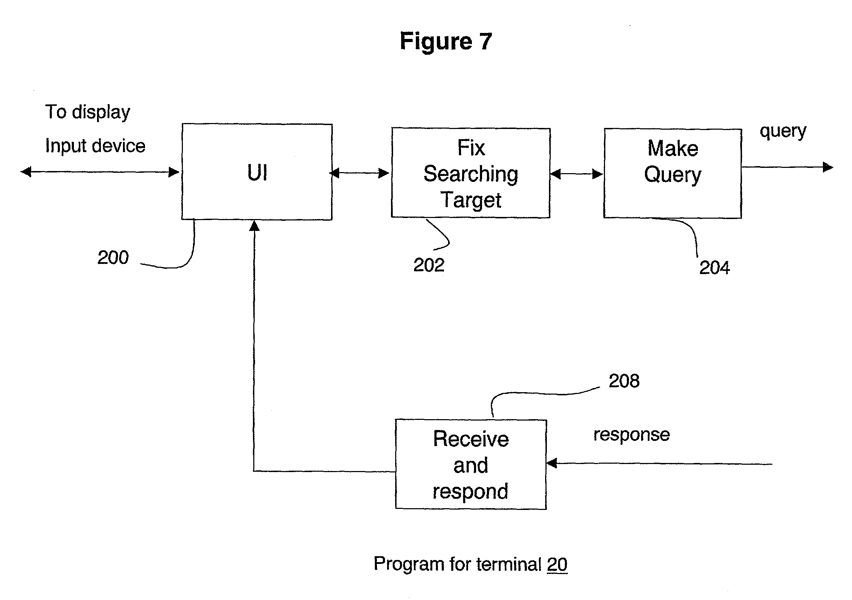

Fig. 7 is a diagram of a terminal program 20 operating on each user terminal 2 shown in Figs. 5 and 6.

As shown in Fig. 7, the terminal program 20 comprises a user interface portion (UI portion) 200, a search target fixing portion 202, an inquiry (query) making portion 204 and receive and response portion 208.

The terminal program 20 is supplied to the user terminal 2 through a recording medium 114, and loaded to the memory 104.

The terminal program 20 makes and transmits to search sensor 3 an inquiry (query) including information that is derived by a user of the above constituent parts.

The terminal program 20 displays a search result returned from the search server 3 to the display/input device 106.

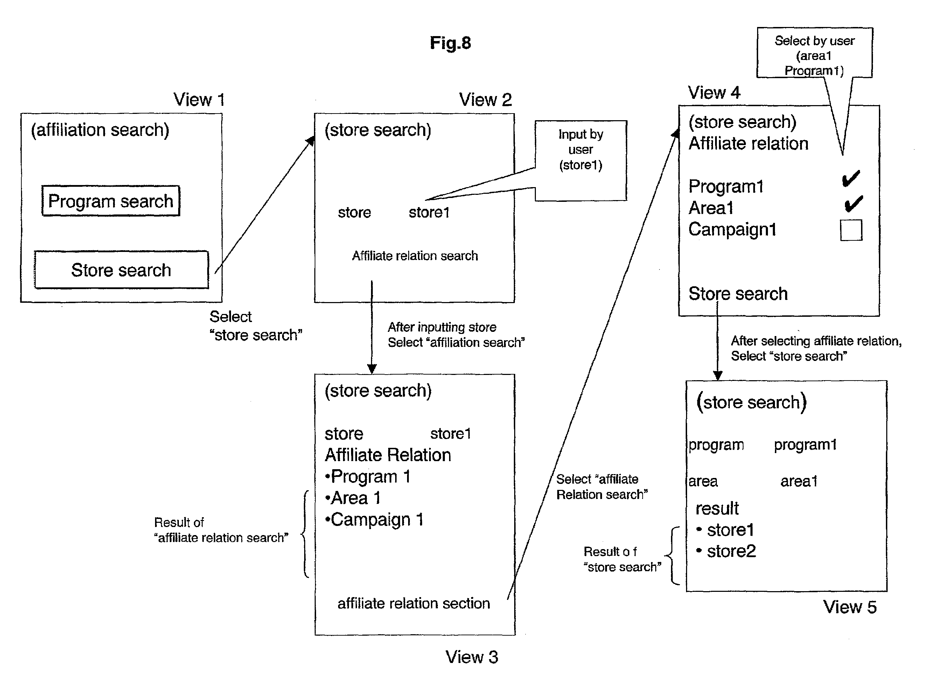

Fig. 8 is a diagram of an example of a UI image which is displayed on the display/input device 106 of the user terminal 2 by the terminal program 20 shown in Fig. 7.

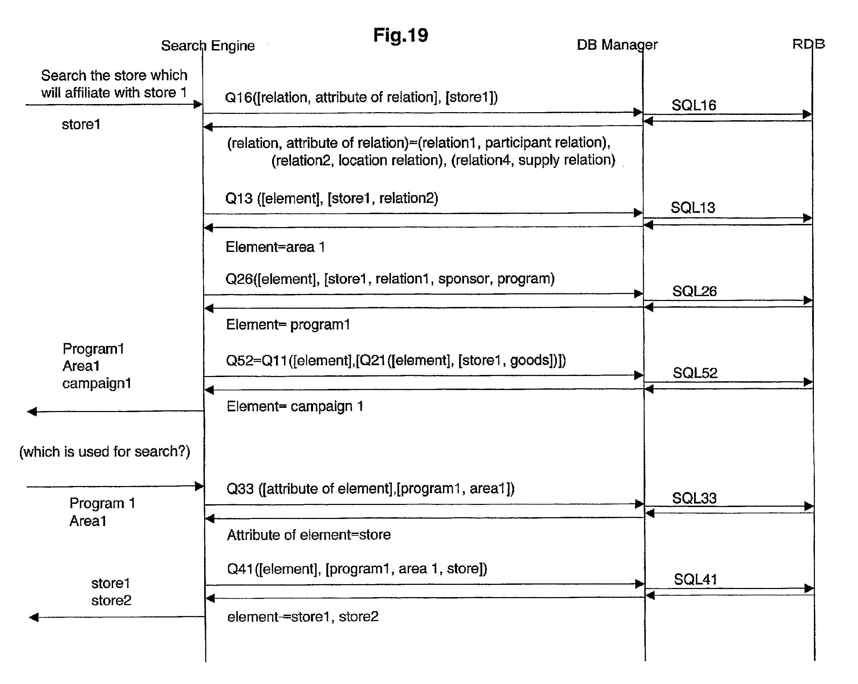

The UI image shown in Fig. 8 corresponds to a communication sequence described later with reference to Fig. 19.

In the terminal program 20, the UI portion 200 displays the UI image shown in Fig. 8 on the display/input device 106 (Figs. 5, 6) of the user terminal 2 and accepts information used for an element search (element/relation and attributes thereof; Figs. 1 to 4) in accordance with a user supplying an operation to the UI image to output that operation to search target fixing portion 202.

The UI portion 200 displays information that the user supplies to it as a search result from the receive and response portion 208 on the UI image.

The UI portion 200 controls the respective constituent parts of the terminal program 20 in accordance with the operation the user supplies to the UI portions, or the like.

The search target fixing portion 202 derives information for fixing a search target (element/relation and attributes thereof; Figs. 1 to 4) on the basis of the information obtained from the UI image, the search result supplied by the receive and response portion 208, etc. Portion 202 outputs the search target fixing information to the query making portion 204.

The query making portion 204 makes an inquiry (query) including search target fixing information derived from portion 202 and transmits that information to search server 3 through network 10.

The receive and response portion 208 receives a response returned from the search server 3 in accordance with the query transmitted from the query making portion 204. Portion 208 outputs to the UI portion 200 the information contained in this response for server 3.

### Search Server 3

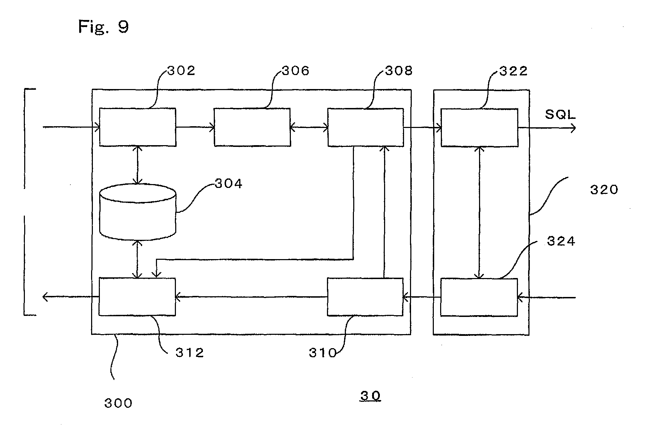

Fig. 9 is a block diagram of the search program 30 that operates on the search server 3 shown in Figs. 5 and 6.

As shown in Fig. 9, search program 30 comprises a search engine 300 and a data base manager 320.

The search engine 300 comprises a query manager 302, a query data base (query DB) 304, a query analyzer 306, a search controller 308, a record analyzer 310 and a response deriving portion 312.

The data base manager 320 comprises an SQL generating portion 322 and a record manager 324.

The search program 30 successively searches an assembly of elements stored in RDB 14 as described above with reference to Figs. 1 to 4 on the basis of the information in the query from the user terminal 2 (the terminal program 20; Fig. 7) by the above constituent parts to return to user terminal 2 an element obtained as a search result.

### Search Engine 300

The query manager 302 receives a query from the user terminal 2 (terminal program 20); manager 302 stores the query in query DB 304 for management.

The query analyzer 306 analyzes the query received by the query manager 302 to extract information in the query (Figs. 1 to 4); analyzes 306 supplies to search controller 308.

### Search Controller 308

The search controller 308 makes an inquiry to RDB 14 on the basis of the information (1) derived by the query analyzer 306, (2) the search result that data base manager 320 derives and the output of record analyzer 310. Controller 308 supplies inquiring data base manager 320.

The search controller 308 controls derivation of a response by the response generating portion 312 on the basis of the information, (1) derived by query analyzer 306, (2) in response to the search result from RDB 14 through the data base manager 320, and (3) derived by record analyzer 310.

The inquiry derived by the search controller 308 is further described by citing specific examples.

Example (1): Query analyzer 306 determines that the query from the user terminal 2 (Fig. 5, Fig. 7) contains one element or relation (Figs. 1 to 4) as a keyword for a search and contains one element, relation, role or the attribute of any one of them (these will be generically referred as information element) as a search target.

At this time, the search controller 308 makes a query for RDB 14 to search for the search target associated with the keyword; RDB 14 outputs the search target to the data base manager 320.

Example (2): Query analyzer 306 determines that the query from the user terminal 2 (Fig. 5, Fig. 7) contains two or more elements and relations (Figs. 1 to 4) in the information elements as keywords for search and contains two or more information elements as a search target.

At this time, the search controller 308 makes a query for RDB 14 to search for two or more search targets associated with the two or more keywords; the RDB outputs the results of the search to the data base manager 320.

Example (3): Query analyzer 306 determines that the query from the user terminal 2 (Fig. 5, Fig. 7) contains one information element as a keyword for search, and contains one of the information elements as a search target.

At this time, as in the case of Example (1), the search controller 308 generated a query for RDB 14 to search for the search target associated with the keyword; the RDB outputs the search result to data base manager 320.

Example (4): Query analyzer 306 determines that the query from the user terminal 2 (Fig. 5, Fig. 7) contains two or more of the information elements (Figs. 1 to 4) as keywords for search, and contains two or more of the information elements as search targets.

At this time, as in the case of Example(2), the search controller 308 makes a query for RDB 14 to search for two or more search targets associated with the two or more keywords; the RDB outputs the search results to data base manager 320.

Example(5): Information elements, whose number is too large to enable display of the information elements on the user terminal 2, are returned from RDB 14 as responses to the queries of Examples (1) to (4). In this case, the search controller 308 properly selects as new keywords one or more search targets contained in the responses from RDB 14. Furthermore, the search controller 308 makes a query for further narrowing the responses from RDB 14 on the basis of the new keywords, and causes controller 3 of command RDB to output the narrowed responses to the data base manager 320.

Example (6): Search controller 308 repeats the selection of this new keyword and the creation of the query on the basis of the new keyword until the number of information elements contained in the response from RDB 14 satisfies a predetermined condition; for example, the number concerned is reduced to a number suitable for displaying the information elements on the user terminal 2.

Furthermore, for example, search controller 308 calculates the coincidence rate of keywords in the information elements in the response from RDB 14 and in the query from user terminal 2. Controller 308 repeats the selection of the new keyword and the generation of the query on the basis of the new keyword until all the coincidence rates of the information elements in the response satisfy a predetermined condition (for example, 80% or more).

The search controller 308 does not make a new query when the information elements in the response from RDB 14 satisfy the predetermined condition and supplies this fact to the response generating portion 312.

With respect to the query made by the search controller 308, the indication of the keywords and the search targets are be carried out by an explicit/direct indication of the information elements themselves or by an indirect indication of the relations among the information elements.

### Data Base Manager 320

In the data base manager 320, the SQL generating portion 322 converts an inquiry from the search controller 308 to an inquiry sentence described in a language, such as SQL or the like, used for searching a data base; the SQL generating portion outputs the connected inquiry sentence to RDB 14.

In the following description, a case where the SQL generating portion 322 uses SQL is described as an example.

Furthermore, SQL generating portion 322 outputs to record manager 324 thus made, described inquiry sentence SQL (SQL sentence).

In accordance with the SQL sentence derived by SQL generating portion 322, the record manager 324 receives a record returned from RDB 14 and manages it in association with the SQL sentence; manager 3 outputs the returned record to the search engine 300.

### Record Analyzer 310

In the search engine 300, the record analyzer 310 analyzes the record received from the data base manager 320 to output the information element obtained as an analysis result to the search controller 308 and the response generating portion 312.

### Response Generating portion 312

The response generating portion 312 generates a response containing an information element from the record analyzer 310 in connection with each query from each user terminal 2 (terminal program 20; Fig. 5, Fig. 7). Portion 312 generates the response on the basis of the notification, etc. from the search controller 308 and outputs the response to the user terminal 2.

That is, when the search controller 308 signals the end of the query to the response generating portion 312, the response generating portion 312 receives an information element from the RDB 14 via record analyzer 310. Portion 312 associates this information element with the query from the user terminal 2 and returns the query to the user terminal 2 that is making the query.

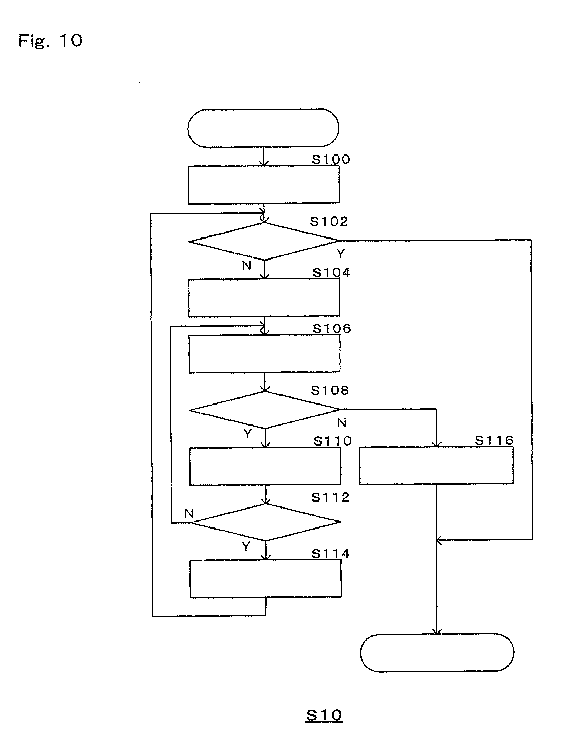

The processing of the search program 30 is further described with reference to Fig. 10, a flowchart of processing (S10) performed by the search program 30 shown in Fig. 9.

As shown in Fig. 10, in step 100 (S100), the query manager 302 first accepts and manages queries from the user terminals 2 (terminal program 20; Fig. 5, Fig. 7) in the search program 30.

In step 102 (S102), the query manager 302 determines whether the processing of all the queries is finished.

When the processing of all the queries is finished, the search program 30 finishes the processing. In the other cases, the processing goes to step S104, viz: start processing of a new query.

In step 104 (S104), query analyzer 306 analyzes a query as a processing target. Then, during step 106 (S106), search controller 308 commands RDB 14 to transmit a query to data base manager 320 as described in Examples (1) to (4).

In step 108 (S108), the record manager 324 determines whether a record searched by RDB 14 is or is not received by data base manager 320 within a specified time.

When data base manager timely receives the record from RDB 14, 310 the search program 30 goes to analysis record processing step S110 that record analyzer 310 performs. In the other cases, the search program 30 goes to the processing step S116. After step S110 search controller 308 determines whether or not all the inquires to RDB 14 for one query as a processing target are finished.

When inquiries about the query as the processing target are completed, the search program 30 goes to processing step S114, and in the other cases, program 30 returns to processing step S106.

In step 114 (S114), the record analyzer 310 outputs the information element contained in the record input from the record manager 324. The information element is derived in response to the output of response generating portion 312.

During step 114, response generating portion 312 outputs a response including the information element derived from the record analyzer 310 in response to the output of the user terminal 2 (terminal program 20) which transmitted the query as the processing target.

In step 116 (S116), the search program 30 carries out an abnormality processing step and then finishes program 30.

### RDB 14/Terminal for Registration 16

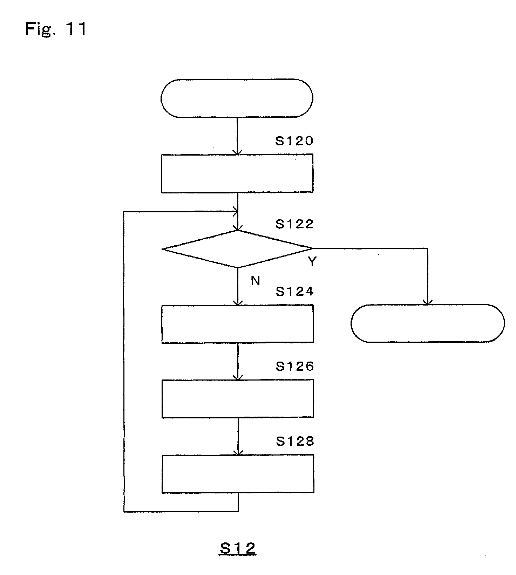

Fig. 11 is a flowchart of how RDB 14 and the registration terminal 16 shown in Figs. 5 and 6 register information elements during processing operation (S12).

The information elements (elements, relations, roles and the attributes thereof; Figs. 1 to 4) registered in RDB 14 are registered by using the registration terminal 16 (Fig. 5) or are searched for in machines 18 by using network 10.

The processing for registering information elements into RDB 14 and the relations thereof are described for the case where the information elements and the relations thereof are registered into RDB 14 by registration terminal 16.

As shown in Fig. 11, registration terminal 16 receives information elements in accordance with a user's operation of the display/input device 106.

Alternatively, registration terminal 16 receives information elements prepared in advance on recording media 114 by other computers (Figs. 2 to 4).

In step 122 (S122), registration terminal 16 determines whether the registration of all the information elements is not completed.

The registration terminal 16 finishes the processing when the registration of all the information elements is completed. In the other cases (i.e., all the information elements are not registered) the registration terminal 16 goes to processing step S124 during which registration terminal 16 analyzes the received information elements(Figs. 2 to 4).

In step 126 (S126), the registration terminal 16 relates the elements with one another on the basis of the relations and the roles achieved as a result of the analysis shown in Fig 1. Terminal 16 also associates the elements and the relations with the attributes (Fig. 3, Fig. 4) of the elements and the relations to carry out mapping in the storage area of RDB 14.

In step 128 (S128), registration terminal 16 stores and registers the information elements thus mapped in RDB 14.

### Basic Search Processing

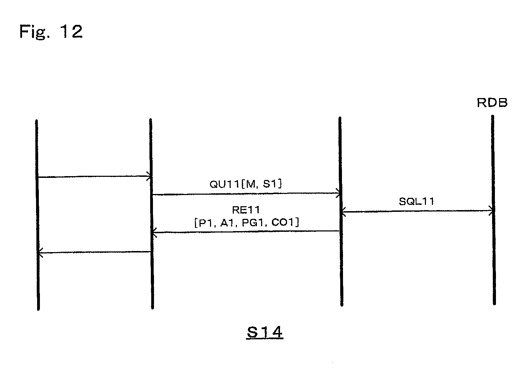

The basic search processing (first search processing) in the information search system 1 is described for the case where the information elements are registered in RDB 14 as shown in Figs. 1 to 4. Fig. 12 is a communication sequence diagram of the basic search processing of the information search system 1 (Fig. 5).

As shown in Fig. 12, when a user searches the elements (Fig. 1, Fig. 2, Fig. 4) relating to store 1 (S1) by using user terminal 2, the user terminal 2 transmits the operation content of the search elements to the search engine 300 (Fig. 9) operating on the search server 3.

Upon receiving the operation content from the user terminal 2, the search engine 300 transmits a search query (QU11[M, S1]) to data base manager 320. The search query designates an element (M) as a search target (output data) and contains store 1 (S1) as a keyword (input element).

Upon receiving the query QU11, the data base manager 320 generates SQL sentence (SQL 11) for searching RDB 14 for the elements relating to the store 1. RDB 14 obtains the search result in response to the SQL sentence (SQL 11).

The data base manager 320 returns the area 1 (A1), the goods (PG1) and the enterprise (CO1) to the search engine 300.

The search engine 300 returns the search result to the user terminal 2 that displays the search result to the user.

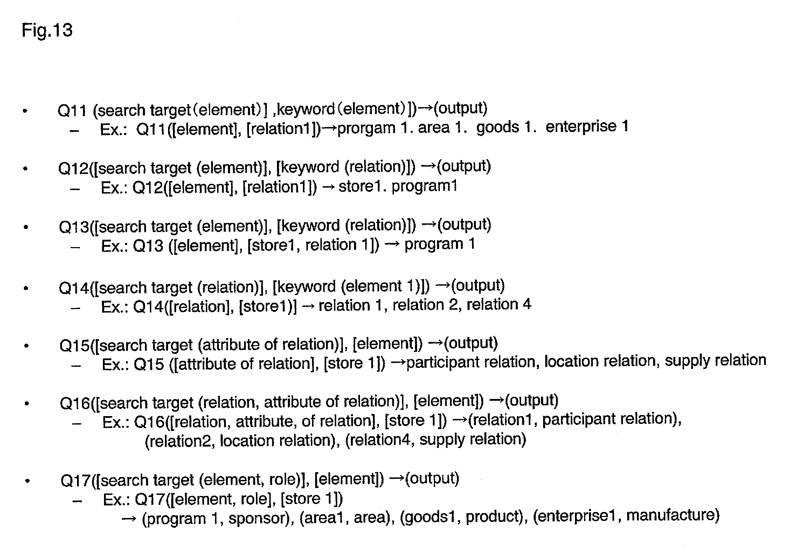

Figs. 13 to 17 are five diagrams of types of queries transmitted from the search engine 300 to data base manager 320.

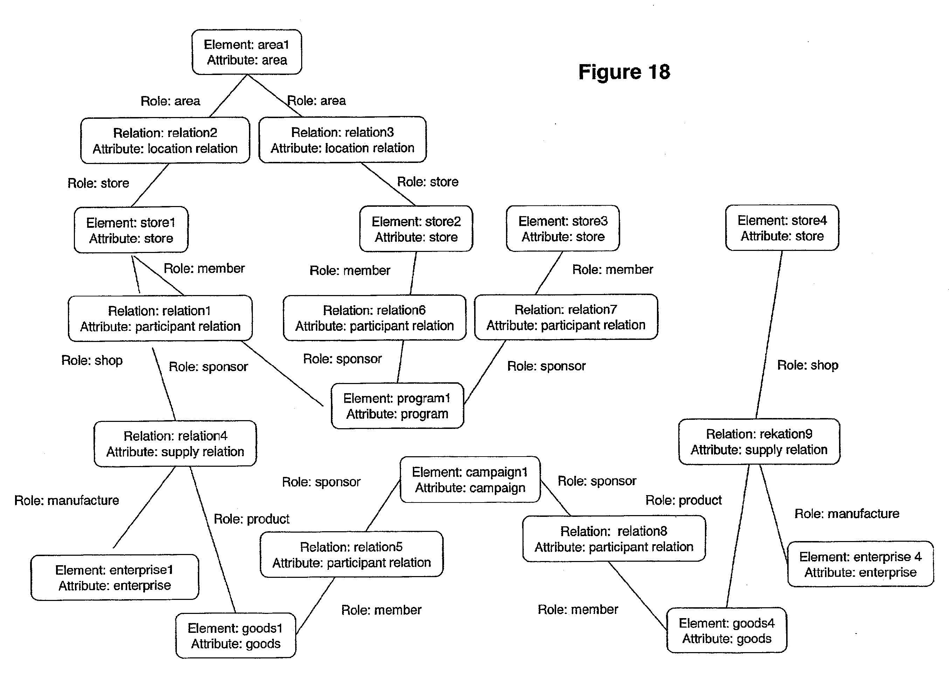

The examples shown in Figs. 13 to 17 basically conform to Fig. 1 (Fig. 18, described later, is an expansion of Fig. 1; the examples shown in Figs. 13 to 17 correspond to Fig. 18).

Fig. 13 is a diagram including query types (Q11 to Q17) when one or more of the elements, the relations, the roles and the attributes thereof are designated as search targets (output data), and one or more of the elements and the relations are designated as keywords (input data) for search.

The search based on selection of any search target and any keyword is performed by the search server 3.

For example, as shown as query Q11 in Fig. 13, the search engine 300 transmits to the data base manager 320 in the search processing shown in Fig. 12, a query containing (1) an element as a search target and an element (store 1) as a search keyword.

The data base manager 320 responds to query Q12 to perform the search on RDB 14. Manager 320 returns the resulting search result containing the elements (store 1, program 1) related to the relation 1.

As shown as query Q12 in Fig. 13, the search engine 300 transmits to data base manager 320 a query containing (1) an element as a search target and (2) a relation (relation 1) as a search keyword.

The data base manager 320 receives the query Q12 to perform the search on RDB 14. RDB 14 responds to query Q12 to return a search result containing the relation 1 and the elements related with the relation 1 (store 1, program 1).

Furthermore, as shown as query Q13 in Fig. 13, the search engine 300 transmits to data base manager 320 a query containing (1) an element (store 1) and (2) a relation (relation 1) as search keywords and (3) an element as a search target.

Upon receiving the query Q13, the data base manager 320 carries out the search on RDB 14, and returns the search result of RDB 14 that contains an element (program 1) related with store 1 and relation 1.

As shown as query Q14 in Fig. 13, search engine 300 transmits to data base manager 320 a query containing (1) a relation between a search target and an element (store 1) as a search keyword.

Upon receiving the query Q14, the data base manager 320 carries out the search on RDB 14 and returns a search result containing relations (relation 1, relation 2, relation 4) related to the store 1.

As shown as query Q15 in Fig. 13, the search engine 300 transmits to the data base manager 320 a query containing a relation between a search target and an element (store 1) as a search keyword.

Upon receiving the query Q15, the data base manager 320 carries out the search on RDB 14 and returns the search result containing attributes (participant relation, location relation and supply relation) related to store 1.

As shown as query Q16 in Fig. 13, the search engine 300 transmits to data base manager 320 a query containing (1) a relation and (2) the attribute thereof as search targets and (3) an element (store 1) as a search keyword.

Upon receiving the query Q16, the data base manager 320 carries out the search on RDB 14 and returns the search result containing combinations of relations and the attributes thereof ((relation 1, participant relation), (relation 2, location relation), (relation 4, supply relation)) related to the store 1.

As shown as query Q17 in Fig. 13, the search engine 300 transmits to the data base manager 320 a query containing (1) an element and the role thereof as search targets and an (2) element (store 1) as a search keyword.

Upon receiving the query Q17, the data base manager 320 carries out the search on RDB 14 that derives a search result containing combinations of elements and the roles thereof ((program 1, sponsor), (area 1, area), (goods 1, product), (enterprise 1, manufacture)) related to the store 1.

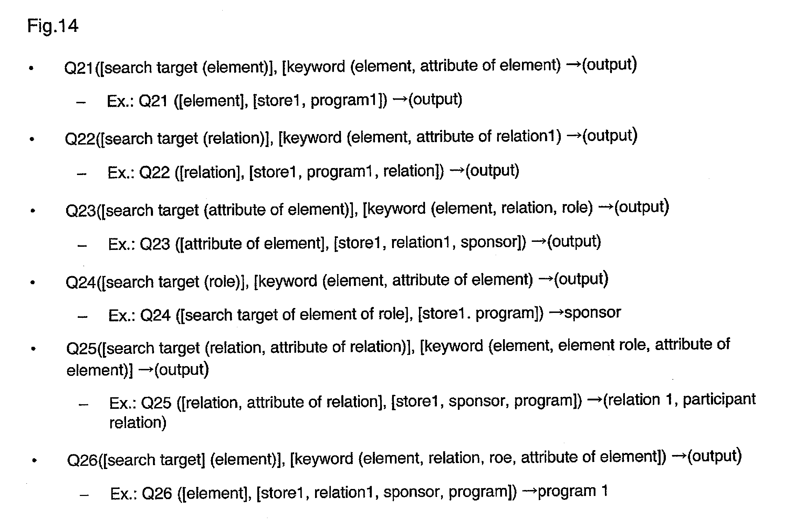

Fig. 14 is a diagram including query types (Q21 to Q26) when one or more of the elements, the relations, the roles and he attributes thereof are designated as search targets, and one or more of the elements and the relations and one or more of the roles and attributes thereof are designated as keywords for search.

For example, as shown as query Q21 in Fig. 14, search engine 300 transmits to data base manager 320 a query containing (1)an element (store 1) and (2) the attribute (program) of the element of the search target as search keywords (input element, the attribute of an element of output data) and (3) an element as a search target.

Upon receiving the query Q21, the data base manager 320 carries out the search on RDB 14, and returns a search result containing the program 1 as an element which is related to the store 1 as shown in Fig. 1 and has the attribute of the program.

As shown as query Q22 in Fig. 14, the search engine 300 transmits to the data base manager 320 a query containing (1) a relation as a search target and (2) an element (store 1) and (3) the attribute (participant relation) of the relation as the search target as search keywords (input element, the attribute of a relation of output data).

Upon receiving the query Q22, the data base manager 320 (1) carries out the search on RDB 14 and (2) returns the search result containing the relation 1 as a relation which is related to the store 1, as shown in Fig. 1, and has the attribute of the participant relation.

Furthermore, as shown as query Q23 in Fig. 14, the search engine 300 transmits to the data base manager 320 a query containing (1) the attribute of an element as a search target and (2) an element (store 1), (3) a relation (relation 1) and (4) the role (sponsor) of the element of the search target as search keywords (input element, input relation, element role of output data).

Upon receiving the query Q22, the data base manager 320 carries out the search on RDB 14 and returns the search result containing a program as the attribute of an element which is related to store 1 and relation 1, as shown in Fig. 1, and plays the role of the sponsor.

As shown as query Q24 in Fig. 14, the search engine 300 transmits to the data base manager 320 a search query containing (1) an element (store 1) and (2) the attribute (program) of the element of the search target as search keywords (input element, the attribute of an element of output data) and (3) the role of an element as a search target.

Upon receiving the query Q24, the data base manager 320 carries out the search on RDB 14 and returns the search result containing a sponsor as the role of the element which has the attribute of the program that is related with the store 1, as shown in Fig. 1.

As shown as query Q25 in Fig. 14, the search engine 300 transmits to the data base manager 320 a query containing (1) a relation and (2) the attribute thereof as search targets and (3) an element (store 1), (4) the role (sponsor) of the element of the search target and (5) the attribute thereof (program) as search keywords (input element, element role of output data, the attribute of the element of the output data).

Upon receiving the query Q25, the data base manager 320 carries out the search on RDB 14 and returns the search result containing (relation 1, participant relation) as a combination of a relation and the attribute thereof related to the store 1, the sponsor and the program, as shown in Fig. 1.

As shown as query Q26 in Fig. 14, the search engine 300 transmits to the data base manager 320 a query containing (1) an element as a search target, and (2) an element (store 1), (3)a relation (relation 1), (4) the role (sponsor) of the element of the search target and the (5) attribute (program) of the element of the search target as search keywords (input element, input relation, element role of output data, element attribute of output data).

Upon receiving the query Q26, the data base manager 320 carries out the search on RDB 14 and returns the search result containing the program 1 which is related with the store 1, the relation 1, the sponsor and the program, as shown in Fig. 1.

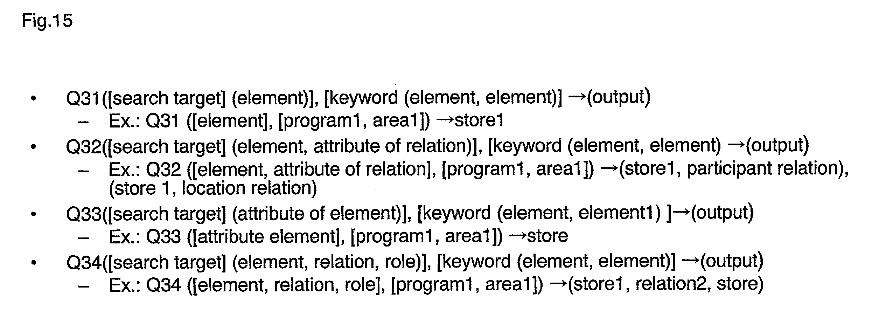

Fig. 15 is a diagram including exemplary query types (Q31 to Q34) that are derived when one or more of the elements, the relations, the roles and the attributes thereof are designated as search targets and plural elements are designated as search keywords.

For example, as shown as query Q31 in Fig. 15, the search engine 300 transmits to the data base manager 320 a query containing (1) an element as a search target and (2) two elements (program 1, area 1) as search keywords. Upon receiving the query Q31, the data base manager 320 carries out the search on RDB 14 to return a search result containing the store 1 as an element related with the program 1 and the area 1, as shown in Fig. 1.

As shown as query Q32 in Fig. 15, the search engine 300 transmits to the data base manager 320 a query containing (1) an element and (2) the attribute of a relation as search targets and (3) two elements (program 1, area 1) as search keywords.

Upon receiving the query Q32, the data base manager 320 carries out the search on RDB 14 and returns a search result containing (store 1, participant relation) and (store 1, location relation) as the combination of an element and the attribute of the relation thereof which are related with the program 1 and the area 1, as shown in Fig. 1.

As shown as query Q33 in Fig. 15, the search engine 300 transmits to the data base manager 320 a query containing (1) the attribute of an element as a search target and (2) two elements (program 1, area 1) as search keywords.

Upon receiving the query Q33, the data base manager 320 carries out the search on RDB 14 and returns a search result containing a store as the attribute of an element related with the program 1 and the area 1, as shown in Fig. 1.

Furthermore, as shown as query Q34 in Fig. 15, the search engine 300 transmits to the data base manager 320 a query containing (1) an element, (2) a relation and (3) the role of an element of output data as search targets and (4) two elements (program 1, area 1) as search keywords.

Upon receiving the query Q34, the data base manager 320 carries out the search on RDB 14 and returns a search result containing (store 1, relation 1, member), (store 1, relation 2, shop) as combinations of an element, a relation and the role of the element related to the program 1 and the area 1, as shown in Fig. 1.

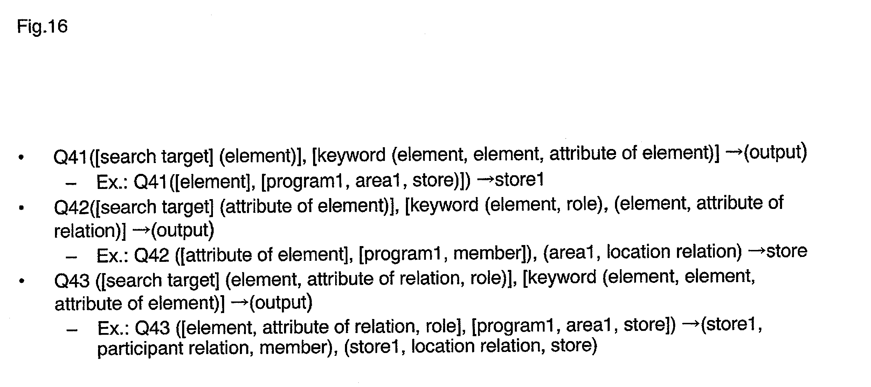

Fig. 16 is a diagram of query types (Q41 to Q43) when one or more of the elements, the relations, the roles and the attributes thereof are designated as search targets, and one or more of plural elements, relations, roles and attributes thereof are designated as search keywords.

For example, as shown as query Q41 in Fig. 16, the search engine 300 transmits to the data base manager 320 a query containing (1) an element as a search target, and (2) two elements (program 1, area 1) and (3) the attribute (store) of the element of the search target as search keywords (input element, element attribute of output data).

Upon receiving the query Q41, the data base manager 320 carries out the search on RDB 14 and returns a search result containing the store 1 which is related to the program 1 and the area 1, as shown in Fig. 1, and has the attribute of a store.

As shown as query Q42 in Fig. 16, the search engine 300 transmits to the data base manager 320 a query containing (1) the attribute of an element as a search target and (2) the combination of (a) an element (program 1) and (b) the role (member) of the element of the search target and (3) the combination of an element (area 1) and the attribute (location relation) of a relation as the keywords (input element, element role of output data, attribute of relation).

Upon receiving the query Q42, the data base manager 320 carries out the search on RDB 14 and returns the search result containing the attribute (store) of an element which is related to the combination of the program 1 and the member and the combination of the area 1 and the location relation as shown in Fig. 1.

As shown as query Q43 in Fig. 16, the search engine 300 transmits to the data base manager 320 a query containing an (1) element, (2) an attribute of a relation with the element, and (3) the role of output data as search targets, and (4) two elements (program 1, area 1) and (5) the attribute (store) of the element of the search target as search keywords (input element, element attribute output data).

Upon receiving the query Q43, the data base manager 320 carries out the search on RDB 14 and returns the search result containing combinations of an element which is related to program 1 and area 1, as shown in Fig. 1, and has the attribute of the store, the attribute of relations related with program 1 and area 1 and the role of an element related with program 1 and area 1 (store 1, participant, member), (store 1, location relation, shop).

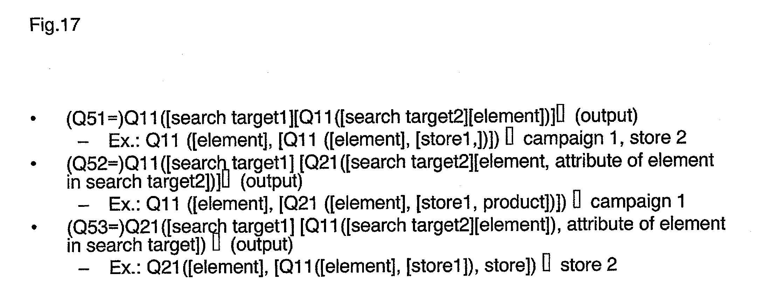

Fig. 17 is a diagram including query types (Q51 to Q53) wherein one or more of the elements, the relations, the roles and the attributes thereof are designated as search targets and a previous search result is used as a search keyword.

For example, as shown as query Q51 in Fig. 17, search engine 300 transmits to data base manager 320 a query (1) containing an element as a search target (search target 1) and (2) containing, as a search keyword, (2) a search result based on query Q11 (Fig. 13) containing (a) an element as a search target (search target 2) and (b) an element (store 1) as a search keyword (input element).

Upon receiving the query Q51, data base manager 320 carries out the search on RDB 14 and returns the search result containing elements (campaign 1, store 2) related to the element (the search result based on Q11) and related to the store 1 as shown in Fig. 1.

In the types of the respective queries shown in Fig. 17, all the search targets and all the search keywords are not necessarily information elements achieved by previous search operations. That is, in the types of the queries shown in Fig. 17, some of the search targets may be information elements achieved by previous search operations, some of the search keywords may be information elements achieved by previous operations, or some of the search targets and some of the search keywords may be information elements achieved by previous search operations.

Furthermore, as shown by query Q52 in Fig. 17, the search engine 300 transmits to the data base manager 320 a query (1) containing an element as a search target (search target 1) and (2) also containing, as a search keyword, a search result based on query Q21 (Fig. 14) (a) containing an element as a search target (search target 2), (b) containing an element (store 1) and (c) containing the attribute (goods) of the element of the search target 2, as the search keywords (input element, the attribute of the element of the search target 2).

Upon receiving the query Q52, the data base manager 320 carries out the search on RDB 14 and returns a search result containing an element (campaign 1) related to the element (the search result based on Q21) which is related to the store 1 as shown in Fig. 1 and has the attribute of the goods.

As shown as query Q53 in Fig. 17, the search engine 300 transmits to the data base manager 320 a query containing (1) an element as a search target (search target 1), and, (2) as an input element 1, a search result based on query Q11 (Fig. 13) containing (a) an element as a search target (search target 2) and (b) an element (store 1) as a search keyword (input element 2) and (3) containing an element attribute (store) of the search target 1 as the search keywords (input element 1, element attribute of search target 1).

Upon receiving the query Q53, the data base manager 320 carries out the search on RDB 14 and returns a search result containing an element (store 2) which is related to the element (the search result of Q11) related to the store 1, as shown in Fig. 1, and has the attribute of the store.

### Applied Search Processing

The applied search processing (second search processing) in the information search system 1 is now described with reference to Fig. 18.

To perform the search processing of Fig. 18, combinations of the basic search processing as shown in Figs. 13 to 16 are used. Furthermore, in the applied search processing of Fig. 18, each search result obtained by each basic search result is properly used as a search target and a keyword as shown in Fig. 17, and used for a search that efficiently narrows the relevant information elements.

Fig. 18 is a second diagram of a network structure of elements (program1, store 1, etc.) and the attributes thereof (program, store, etc.), relations (relation 1, etc.)/roles (shops, etc.) among the elements and the attributes thereof (participant relation, location relation, etc.). Fig. 19 is a communication sequence diagram of the second search processing of Fig. 18 in the information search system 1 (Fig. 5).

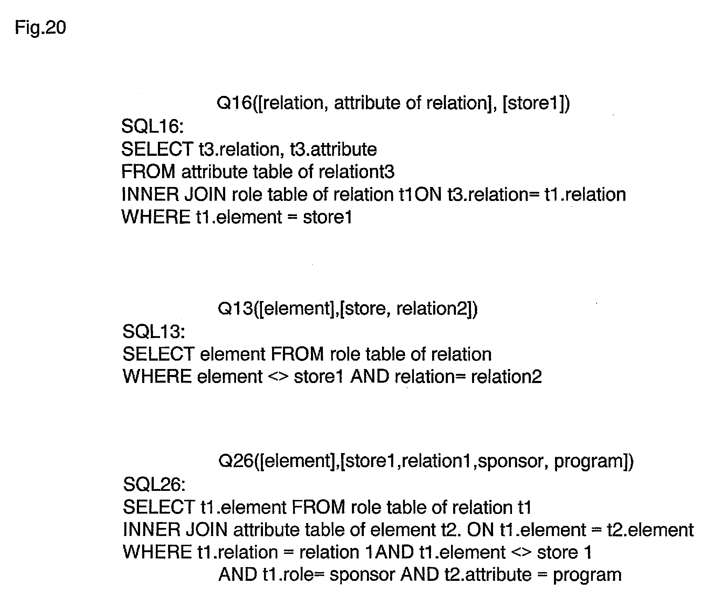

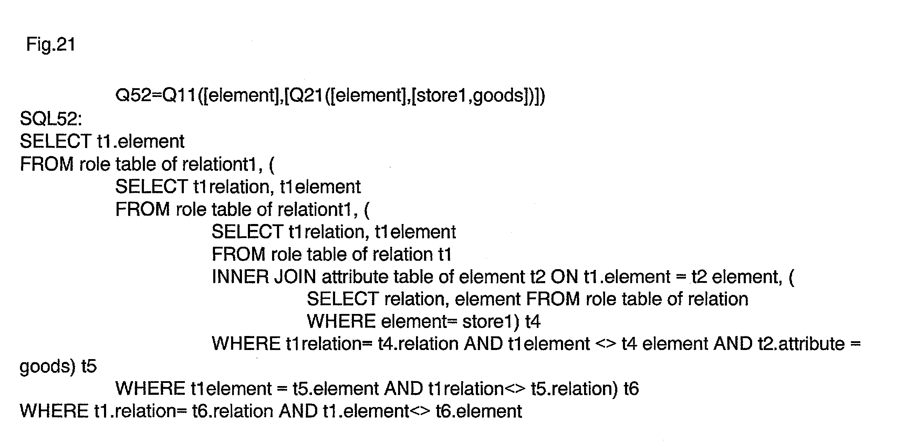

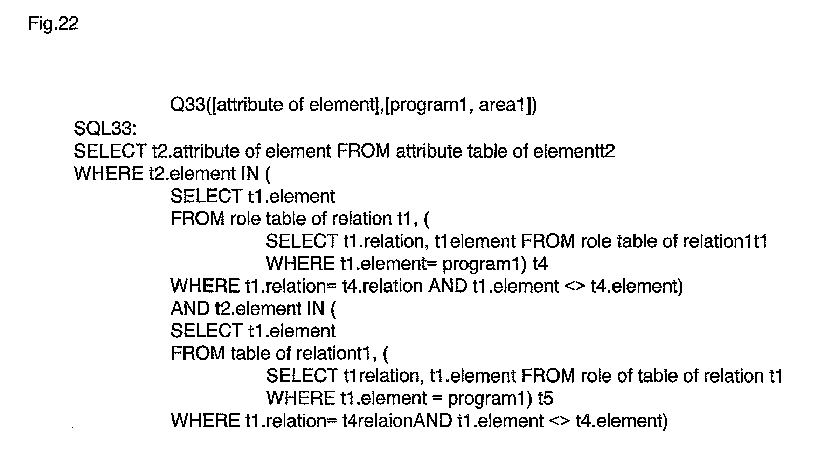

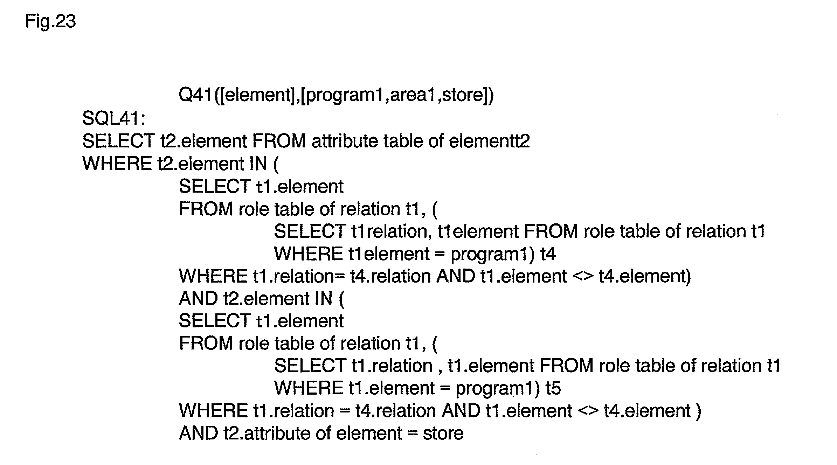

Figs. 20 to 23 are four diagrams including an SQL sentence supplied by data base manager 320 (Fig. 9) to RDB 14, such that: Fig. 20 includes the contents of SQL 16, SQL 13, and SQL 26 of Fig. 19, Fig. 21 includes the content of SQL 52 of Fig. 19, Fig. 22 includes the content of SQL 33 of Fig. 19, and Fig. 23 includes the content of SQL 41 of Fig. 19.

In the following description, a case where information elements are registered in RDB 14, as shown in Fig. 18, is described as a specific example.

As shown in Fig. 19, the user terminal 2 responds to a user's input to output a request to search engine 300 (Fig. 9). The request includes information to search for a store affiliated with, for example, store 1. At this time, the user of the user terminal 2 starts "store search" on the UI screen 1 of Fig. 8. In accordance with this start operation, the search engine 300 starts the search based on the affiliation.

Search engine 300 transmits to data base manager 320 a query containing (1) the relation and (2) a relation attribute as search targets (output data) and (3) the store 1 as a keyword as shown by query Q16 in Fig. 13.

Upon receiving the query Q16 from the search engine 300, the data base manager 320 generates SQL sentence (SQL 16) (indicated at the upper stage of Fig. 20) and transmits SQL 16 to RDB 14.

In response to SQL 16, RDB 14 searches a relation and the attribute thereof related to store 1, as shown in Fig. 18, and returns to the data base manager 320 a response containing a combination of the relation and the attribute thereof (relation 1, participant relation), (relation 2, location relation) and (relation 4, supply relation).

Data base manager 320 transmits this response to search engine 300.

Next, search engine 300 transmits to data base manager 320 query Q13 (Fig. 13) containing an element as a search target and containing the store 1 and the relation 2 as keywords.

Upon receiving the query Q13 from the search engine 300, data base manager 320 generates an SQL sentence (SQL 13), indicated at the intermediate stage of Fig. 20, and transmits SQL 13 to RDB 14.

In response to SQL 13, RDB 14 searches for an element related with the store 1 and the relation 2, as shown in Fig. 18, and returns to data base manager 320 a response containing an element (area 1). Data base manager 320 transmits this response to search engine 300.

Next, as shown as query Q26 in Fig. 14, search engine 300 transmits to data base manager 320 a query containing (1) an element as a search target and (2) store 1, (3) relation 1, (4) an element role of output data (sponsor), and (5) element attribute of output data (program) as keywords. Upon receiving the query Q26 from the search engine 300, the data base manager 320 generates an SQL sentence (SQL 26) at the lower stage of Fig. 20, and transmits SQL 26 to RDB 14. In response to SQL 26, RDB 14 returns to the data base manager 320 a response containing (1) an element (program 1) related to store 1 and (2) relation 1 having the role (sponsor) and (3) the element attribute (program), as shown in Fig. 18. The data base manager 320 transmits this response to the search engine 300. Next, as shown as query Q52 in Fig. 17, search engine 300 transmits to the data base manager 320 a query which (1) contains an element as a search target and (2) contains as a keyword a search result based on the query (Q21) containing an element as a search target and (3) the element (store 1) and (4) the attribute (goods) of the element of the search target as keywords. Upon receiving query Q52 from the search engine 300, the data base manager 320 generates an SQL sentence (SQL 52), Fig. 21, and transmits SQL 52 to RDB 14. In response to sentence (SQL 52) RDB 14 returns to the data base manager 320 a response (1) containing an element (campaign 1) related to the element (the search result based on Q21) which is related to the store 1 and has goods as the element attribute as shown in Fig. 18. Data base manager 320 transmits this response to search engine 300.

The search engine 300 transmits to the user terminal 2 (1) program 1, (2) area 1 and (3) campaign 1 which have been obtained as the current search results. Search engine 300 also causes user interface (UI) 200 to activate the display of user terminal 2 and provide the user with an image that prompts the user to instruct whether a search using any one or more of the search results is to be carried out. The user operates on the UI image to instruct conducting a search using program 1 and area 1, for example.

Upon receiving this instruction, the search engine 300 transmits to the data base manager 320 a query containing an element attribute as a search target and program 1 and area 1 as keywords, as shown as query Q33 in Fig. 15.

Upon receiving the query Q33 from the search engine 300, the data base manager 320 generates an SQL sentence (SQL 33), Fig. 22, and transmits SQL 33 to RDB 14. In response to SQL 33, RDB 14 returns to the data base manager 320 a response containing an element attribute (store) related to program 1 and area 1, as shown in Fig. 18. The data base manager 320 transmits this response to search engine 300.

In the foregoing description, the case where the keyword is designated by the user has been described above for SQL 33. However, the search target, or the search target and the keyword may be designated by the user. In such a case, the search engine 300 also generates a query by using the search target and the keyword or the search target designated by a user. Search engine 300 transmits the generated query to data base manager 320.

Furthermore, the search engine 300 may generate a query containing the information element thus designated and the information element properly selected, as in the case of the processing of query SQL 52 or preceding processing as a search target and a search keyword, or any one of them. Search engine 300 then transmits the generated query to data base manager 320.

The search engine 300 generates a query containing the information element thus designated and the information element properly selected, as in the case of the processing of query SQL 52, and the proceeding processing as a search target and a search keyword or any one of them. Search engine 300 transmits the generated query to data base manager 320.

Next, as shown by query Q41 in Fig. 16, search engine 300 transmits to the data base manager 320 a query containing an element as a search target, and program 1, area 1 and the element attribute (store) as keywords.

Upon receiving the query Q41 from the search engine 300, the data base manager 320 generates an SQL sentence (SQL 41), Fig. 23 and then transmits the generated SQL sentence to RDB 14.

In response to SQL 41, RDB 14 returns to the data base manager 320 a response containing elements (store 1, store 2) related with the program 1 and the area 1 and having the attribute of the store, as shown in Fig. 18. The data base manager 320 transmits this response to the search engine 300 that displays on user terminal 2 the search result, store 1, store 2.

While there have been described and illustrated a specific embodiment of the invention, it will be clear that variations in the details of the embodiment specifically illustrated and described may be made without departing from the scope of the invention as defined in the appended claims.

## Claims

1. An information search apparatus for searching one or more stored information elements that are related to one another, comprising:
selecting means for selecting one or more first information elements as targets to be searched for and one or more second information elements used for the search; and
searching means for searching, from the selected first information elements, third information elements related to the selected second information elements.

2. The information search apparatus according to claim 1, wherein the information elements include one or more elements indicating a substantive thing, one or more relations between the elements, one or more roles played by the elements in the relations, one or more attributes of the elements, and one or more attributes of the relations, or one or more combinations thereof.

3. The information search apparatus according to claim 2, wherein the elements are further related with one another by affiliations between the elements.

4. The information search apparatus according to claim 1, 2 or 3, wherein the selecting means is arranged to select one or more of the elements, the relation and the role as the first information element, and select, as the second information element, one or more of the elements, the relation, role, the attribute of the elements and the attributes of the relation.

5. The information search apparatus according to claim 1, 2 or 3, wherein the selecting means is arranged to select the first information element, the second information element and the third information element on the basis of a search request or a subordinate search request achieved as an analysis result of the search request.

6. The information search apparatus according to claim 1, 2 or 3, wherein the selecting means is arranged to select one or more of the first information elements and one or more of the second information elements or any one of the first information elements and the second information elements in accordance with the selection of the third information element obtained as a result of the searching.

7. The information search apparatus according to claim 1, 2 or 3, further comprising
accepting means for accepting selection of one or more of the first information elements and one or more of the second information elements, or the third information elements used as the first information elements or the second information elements,
wherein the selecting means is arranged to select the first information elements and the second information elements from the selected third information elements, or to select the first information elements and the second information elements from the stored information elements and the selected third information elements.

8. The information search apparatus according to claim 1, 2 or 3, wherein
the selecting means is arranged for selecting the first information, and second information, and the search means is arranged for repeatedly searching the third information until the third information satisfies a predetermined condition.

9. A method of searching one or more stored information elements, the information elements being related with one another, comprising
selecting one or more first information elements as targets to be searched for and one or more second information elements used for the search, and
searching, from the selected first information elements, third information elements related to the selected second information elements.

10. The information search method according to claim 9, wherein the information elements includes (a) one or more elements indicating a substantive thing, (b) one or more defined relations between the elements, (c) one or more roles played by the elements, (d) one or more attributes of the elements and (e) one or more attributes of the relations, or one or more combinations thereof.

11. The information search method according to claim 10, wherein the elements are also related to one another by affiliations between the elements.

12. The information search method according to claim 9, 10 or 11, further including repeating the selection of the first information and the second information, and the search of the third information until the third information satisfies a predetermined condition.

13. The information search method according to any of claims 9 to 12, wherein the step of selecting one or more of the elements includes selecting (a) the relation and the role as the first information element, and (b) one or more of the elements, the relations, roles, the attributes of the element and the attribute of the relation as the second information element.

14. The information search method according to any of claims 9 to 12, wherein the selecting step includes selecting the first information element, the second information element and the third information element on the basis of a search request or a subordinate search request achieved as an analysis result of the search request.

15. The information search method according to any of claims 9 to 12, wherein the selecting step includes selecting one or more of the first information elements and one or more of the second information elements or any one of the first information elements and the second information elements in accordance with the selection of the third information element obtained as a result of the searching.

16. The information search method according to any of claims 9 to 12, further comprising:
accepting a selection of one or more of the first information elements and one or more of the second information elements, or the third information elements used as the first information elements or the second information elements,
wherein the selecting step includes selecting the first information elements and the second information elements from the third information elements thus selected, or selecting the first information elements and the second information elements from the stored information elements and the selected third information elements.

17. A computer program comprising computer program code means for performing all of the steps of any of claims 9 to 16 when said program is run on a computer.

18. A computer program as claimed in claim 17 embodied on a computer readable medium.
